# NEUE EUROPÄISCHE PATENTSCHRIFT

(11) **EP 2 549 098 B2**
(45) Veröffentlichungstag und Bekanntmachung des Hinweises auf die Entscheidung über den Einspruch: **05.04.2023**
(45) Hinweis auf die Patenterteilung: 04.01.2017
(21) Anmeldenummer: 12176256.1
(22) Anmeldetag: 13.07.2012
(51) Int. Cl.: F03D 7/02

(54) **Verfahren zum Betreiben einer Windenergieanlage sowie Windenergieanlage**
Method for operating a wind turbine and wind turbine
Procédé de fonctionnement d'une éolienne et éolienne

(30) Priorität: 18.07.2011 DE 102011079344
(43) Veröffentlichungstag der Anmeldung: 23.01.2013
(73) Patentinhaber: Siemens Gamesa Renewable Energy Service GmbH, 20097 Hamburg (DE)
(72) Erfinder: Gätjens, Jörg, 24783 Osterrönfeld (DE); Rieck, Christian, 24536 Neumünster (DE)
(74) Vertreter: Wallinger Ricker Schlotter Tostmann

(56) Entgegenhaltungen:
- WO-A1-2005/116445
- WO-A1-2010/128940
- DE-C1- 19 717 059
- US-A1- 2009 081 041

## Beschreibung

Die Erfindung betrifft ein Verfahren zum Betreiben einer Windenergieanlage mit einem Turm sowie einer auf dem Turm drehbar angeordneten Maschinengondel mit einem Rotor, sowie eine entsprechende Windenergieanlage und ein Computerprogrammprodukt.

Bekannte Windenergieanlagen verfügen über einen Turm, auf dessen Spitze eine Maschinengondel drehbar angeordnet ist. Diese beherbergt einen Generator und gegebenenfalls ein Getriebe, die mit einem Rotor verbunden sind, der sich um eine Rotorachse dreht. Im regulären Betrieb wird die Maschinengondel mit dem Rotor um die Turmachse gedreht, um sie der veränderlichen Windrichtung nachzuführen. Die Steuerung dieser Drehung um die Turmachse wird als Azimutsteuerung bezeichnet.

Ein Beispiel einer entsprechenden Azimutsteuerung ist ein aus WO 2010/128940 A1 bekanntes Verfahren zur Steuerung einer Windenergieanlage in eine Ruheposition, in der die Gondel aus dem Wind gedreht wird, wobei sie um einen Winkel von mehr als 120°, vorzugsweise 180°, aus einer Betriebsposition heraus gedreht wird. Diese Ruheposition wird aktiv durch einen Azimutantrieb beibehalten. Damit sollen Belastungen einer Windenergieanlage in einem shut-down-Modus reduziert werden und Beschädigungen von wichtigen Komponenten vermieden werden.

In US 2009/0081041 A1 wird ein Verfahren zur Steuerung einer Windenergieanlage mit einer Gondel auf einem Turm und einem Rotor offenbart. Um die Belastung auf die Anlage bei einer Fehlfunktion der Blattwinkelverstellung zu reduzieren, wird vorgeschlagen, die Funktion der Blattwinkelverstellung zu überwachen und bei Eintritt eines Fehlers die Gondel aus einer Betriebsposition in eine Ruheposition zu verdrehen, in der die Windlast gegenüber der Betriebsposition reduziert ist.

Eine Begrenzung findet die Azimutsteuerung unter anderem aufgrund der Kabelverdrillung derjenigen Kabel, die von der Maschinengondel in den Turm führen und die elektrischen Komponenten in der Maschinengondel mit bodenständigen Komponenten verbinden, beispielsweise Leistungskabel. Wenn sich die Maschinengondel mehrmals um die Turmachse gedreht hat, sind diese Kabel soweit verdrillt, dass eine weitere Verdrehung der Maschinengondel um die Turmachse in die gleiche Richtung zu einer Beschädigung der Kabel und ihrer Verbindungen führen würde. Daher wird in diesem Fall, üblicherweise nach einer Drehung der Maschinengondel um 720°, also einer zweifachen Komplettdrehung, eine automatische Entdrillung eingeleitet, die Maschinengondel also wieder zurückrotiert, um die Verdrehung bzw. Verdrillung der Kabel zu beheben.

Während die übliche Art des Betriebs einer Windenergieanlage mit automatischer Windnachführung in den meisten Fällen einen optimalen Betrieb gewährleistet und eine optimale Energieausbeute nach sich zieht, ist die übliche Azimutsteuerung in Sonderfällen ungünstig. Es ist daher die Aufgabe der vorliegenden Erfindung, ein Verfahren und eine entsprechende Windenergieanlage sowie ein Computerprogrammprodukt zur Verfügung zu stellen, mit denen der Betrieb einer Windenergieanlage in Ausnahmesituationen sicherer und effizienter gestaltbar ist.

Diese Aufgabe wird durch ein Verfahren zum Betreiben einer Windenergieanlage mit einem Turm sowie einer auf dem Turm drehbar angeordneten Maschinengondel mit einem Rotor gelöst, das dadurch weitergebildet ist, dass die Maschinengondel mittels wenigstens einer in einer Azimutsteuerung der Windenergieanlage implementierten Azimut-Sondersteuerung zu einer, insbesondere vorbestimmten oder vorbestimmbaren, Azimut-Sonderposition verfahren wird, wenn eine in der Azimut-Sondersteuerung definierte Eintrittsbedingung erfüllt ist, wobei mehrere verschiedene Azimut-Sondersteuerungen mit jeweils unterschiedlichen Eintrittsbedingungen und/oder Austrittsbedingungen implementiert sind, die jeweils mit der gleichen Azimut-Sonderposition oder mit verschiedenen Azimut-Sonderpositionen verbunden sind, wobei verschiedenen Azimut-Sondersteuerungen in der Azimutsteuerung verschiedene Prioritäten zugewiesen sind, wobei bei Erfüllung mehrerer Eintrittsbedingungen und/oder Austrittsbedingungen diejenige Azimut-Sondersteuerung mit der höchsten Priorität ausgeführt wird.

Die Azimutsteuerung und die Azimut-Sondersteuerung können beispielsweise als Computerprogramm in einer als Datenverarbeitungsanlage und der Computer ausgebildeten Steuereinheit der Windenergieanlage ausgebildet sein oder als fest verdrahtete Elektronik, in der die Steuerung und die Sondersteuerung durch eine vorbestimmte ausgewählte Verdrahtung implementiert sind.

Die Erfindung beruht auf dem Grundgedanken, dass Sondersituationen sicherer und effizienter behandelbar sind, wenn die Azimutsteuerung nicht eine übliche Windnachführung mit einer Ausrichtung des Rotors zur aktuellen Windrichtung hin durchführt, sondern die Maschinengondel weitgehend automatisiert in eine Azimut-Sonderposition verfährt. Dies kann insbesondere auch bedeuten, dass die Maschinengondel in einer bereits eingenommenen Azimut-Sonderposition verbleibt.

Ebenso ist es im Rahmen der Erfindung vorgesehen, dass bei Einleitung einer Azimut-Sondersteuerung die Gondel zunächst in eine Richtung, beispielsweise eine Kabel-Entdrillrichtung, verfahren wird und während des Verfahrens die Azimut-Sonderposition bestimmt wird. Eine Azimut-Sonderposition kann also vorbestimmt oder vorbestimmbar sein oder erst im Verlauf einer Azimut-Sondersteuerung bestimmt werden. Außerdem kann erfindungsgemäß eine vorbestimmte Azimut-Sonderposition im Verlauf oder im Rahmen einer Azimut-Sondersteuerung gegebenenfalls noch verändert werden, also die anzufahrende Zielposition noch geändert werden.

Im Stand der Technik ist es üblich, Sonderpositionen weitgehend manuell anzufahren, indem die automatische Windnachführung unterbrochen wird und eine gewünschte Azimutposition über Tastenbefehle an der Windenergieanlage oder über eine Fernüberwachung eingestellt wird. Hierbei besteht die Gefahr der Fehlbedienung sowie das Risiko, dass das Wartungspersonal nach Beendigung der Arbeiten vergisst, die Anlage wieder in den Automatikbetrieb zu versetzen.

Eine entsprechende Azimut-Sonderposition ist vorzugsweise eine windrichtungsunabhängige Winkelposition oder ein windrichtungsunabhängiger Winkelsektor oder ein vorgegebener oder vorgebbarer Differenzwinkel zur Windrichtung. Eine windrichtungsunabhängige Winkelposition kann beispielsweise als Serviceposition bei stillgesetztem Rotor, beispielsweise aufgrund lokaler Gegebenheiten, gewählt sein.

Ein Winkelsektor, der von einem Minimalwinkel bis zu einem Maximalwinkel auf der Windrose reicht und in dem jeder beliebige Winkel innerhalb des Winkelsektors als Sonderposition eingenommen werden kann, wird in Fällen gewählt, in denen beispielsweise bestimmte Winkel oder Winkelsektoren nicht angefahren werden sollen. Falls in diesem Fall bei Eintritt einer Eintrittsbedingung sich die Maschinengondel bereits im Sonder-Winkelsektor befindet, kann sie dort verbleiben, ohne weiter verfahren zu werden. Dies ist im Rahmen der vorliegenden Erfindung unter dem Begriff des Verfahrens in die Azimut-Sonderposition umfasst.

Ein Beispiel hierfür ist das Vorhandensein von Strukturen auf der Bodenoberfläche, die durch die Rotorblätter nicht beeinträchtigt werden sollen. Beispielsweise sind bei einer Enteisung herabfallende Eisstücke zu befürchten. Eine Auflage einer Baugenehmigung kann hierbei sein, dass die Eisblöcke nicht in bestimmten Regionen unterhalb der Windenergieanlage herunterfallen dürfen.

Ein vorgegebener oder vorgebbarer Differenzwinkel zur Windrichtung kann beispielsweise zur Lastenreduktion bei Starkwind verwendet werden, um zu einem späteren Abschalten der Windenergieanlage zu führen, so dass die Energieausbeute und Effizienz der Windenergieanlage vergrößert wird.

In einer vorteilhaften Weiterbildung des Verfahrens ist vorgesehen, dass die Azimut-Sondersteuerung beendet wird, wenn die Eintrittsbedingung der Azimut-Sondersteuerung nicht mehr erfüllt ist und/oder eine Austrittsbedingung zur Azimut-Sondersteuerung erfüllt ist. Eine Austrittsbedingung kann beispielsweise ein externer Befehl zum Verlassen der Azimut-Sondersteuerung sein. Es kann ausgewählt werden, ob die Azimut-Sondersteuerung nur dann verlassen wird, wenn auch die Eintrittsbedingung nicht mehr vorliegt, oder ob der Austrittsbefehl auch ausgeführt wird, wenn die Eintrittsbedingung noch vorliegt. Auch ohne Austrittsbedingung kann beispielsweise die Azimut-Sondersteuerung beendet werden, wenn die Eintrittsbedingung nicht mehr erfüllt ist.

Für verschiedene mögliche vorkommende Sonderfälle ist erfindungsgemäß vorgesehen, dass mehrere verschiedene Azimut-Sondersteuerungen mit jeweils unterschiedlichen Eintrittsbedingungen und/oder Austrittsbedingungen implementiert sind, die jeweils mit der gleichen Azimut-Sonderposition oder mit verschiedenen Azimut-Sonderpositionen verbunden sind. Zu jeder Azimut-Sondersteuerung kann die entsprechende Azimut-Sonderposition individuell ausgewählt werden, wobei es auch möglich ist, dass mehrere oder alle Azimut-Sondersteuerungen mit der gleichen Azimut-Sonderposition verbunden sind.

Für die mehreren Azimut-Sondersteuerungen gilt auch, dass diese mit individuell auswählbaren oder zu verknüpfenden Eintritts- und/oder Austrittsbedingungen verbunden sind.

Da erfindungsgemäß verschiedenen Azimut-Sondersteuerungen in der Azimutsteuerung verschiedene Prioritäten zugewiesen sind, wobei bei Erfüllung mehrerer Eintrittsbedingungen und/oder Austrittsbedingungen diejenige Azimut-Sondersteuerung mit der höchsten Priorität ausgeführt wird, lassen sich Konflikte zwischen verschiedenen Sonderereignissen, die zu einer Azimut-Sondersteuerung führen, vermeiden und eine effiziente und sichere Azimutsteuerung der Windenergieanlage verwirklichen. Prioritäten werden vorteilhafterweise nach Kriterien vergeben, die die Betriebssicherheit, die Effizienz und andere Parameter betreffen. Bei sicherheitsrelevanten Zuständen wie einer Vereisung oder bei Störungen bei Sturm wird der entsprechenden Azimut-Sondersteuerung eine hohe Priorität zugewiesen, Wartungsanfragen dementsprechend eine niedrigere Priorität.

Als Eintrittsbedingung oder Eintrittsbedingungen einer oder mehrerer Azimut-Sondersteuerungen wird oder werden vorzugsweise ein Zeitpunkt, eine Zeitverzögerung, eine Serviceanfrage, ein Helikopter-Anflug, ein Eintritt einer zu vermeidenden Schattenwurf- oder Reflektionslage, eine vorhandene oder zu erwartende Rotorvereisung, ein Überschreiten einer ersten Grenzwindgeschwindigkeit, einer ersten Grenzwellenhöhe bei Offshore-Windenergieanlagen, einer ersten Grenzturmschwingungsamplitude, einer ersten Tierkollisionswahrscheinlichkeit und/oder eine Windnachführungsbedingung bei Rotorarretierung oder bei Starkwind angewendet. Diese Eintrittsbedingungen definieren verschiedene Sondersituationen, die zu einer Azimut-Sondersteuerung führen können und die einzeln als Eintrittsbedingung oder in einer verknüpften Art und Weise verwendet werden können.

Wenn hierbei als Eintrittsbedingung ein Zeitpunkt verwendet wird, kann beispielsweise eine Wartezeit bei einer Serviceausführung vermieden werden, da sich bei Beginn der Servicearbeiten die Maschinengondel bereits in der gewünschten Azimutposition befindet. Dies ist insbesondere auch bei Großanlagen mit einigen Megawatt Nennleistung interessant, da bei diesen Windenergieanlagen die Windnachführgeschwindigkeit üblicherweise im Bereich von 0,3 bis 0,5 % liegt und somit fünf bis fünfzehn Minuten vergehen können, bevor eine gewünschte Gondelposition erreicht ist.

Als Zeitpunkt wird hierbei bevorzugt ein Startzeitpunkt verwendet oder vorgegeben. In diesem Fall beginnt die Windenergieanlage zum vorgegebenen Zeitpunkt mit dem Verfahren der Gondel zur Einstellung der Azimut-Sonderposition. Alternativ und ebenfalls besonders bevorzugt wird als Zeitpunkt ein Zielzeitpunkt verwendet oder vorgegeben. In diesem Fall berechnet die Azimut-Sondersteuerung automatisch die benötigte Zeit zur Einstellung der gewünschten Azimut-Sonderposition und leitet den Verfahrvorgang so ein, dass die gewünschte Azimut-Sonderposition zum Zielzeitpunkt erreicht wird oder ist.

Bei einer Zeitverzögerung als Eintrittsbedingung kann der vorhandene normale Betriebsmodus länger ausgenutzt werden. Bevorzugt wird auch eine Serviceanfrage mit einer Zeitverzögerung und/oder Zielzeitvorgabe verbunden, so dass bei einer Serviceanfrage die Sonder-Azimutsteuerung zum spätest möglichen Zeitpunkt ausgeführt wird, so dass das Serviceteam bei Eintreffen, also beispielsweise 15 Minuten später, die Windenergieanlage in der sondergesteuerten Sonderposition vorfindet.

Bei einem Helikopter-Anflug kann die Windenergieanlage in eine Sonderposition verfahren werden, um beispielsweise geländeabhängige Einflugschneisen zu ermöglichen. Weitere geländeabhängige Eintrittsbedingungen sind beispielsweise der Eintritt einer zu vermeidenden Schattenwurf- oder Reflektionslage, die insbesondere bei einem bestimmten Sonnenstand eintreten und in Bezug auf vorhandene Wohnbebauung oder Verkehrsstraßen zu vermeiden sind und gegebenenfalls in einer Auflage einer Baugenehmigung festgelegt sein können.

Ebenso ist es, insbesondere bei einem Helikopteranflug, vorteilhaft, eine mittlere Windrichtung zu ermitteln und einen vorgebbaren Differenzwinkel zu der ermittelten mittleren Windrichtung als feste Azimut-Sonderposition einzustellen, die bei Windrichtungsschwankungen anschließend nicht mehr verändert wird. Dies kommt insbesondere dem Helikopter-Anflug zugute, bei dem die Windenergieanlage parallel zur Rotorebene und möglichst gegen die Windrichtung angeflogen wird oder werden soll. Während des Anflugs sollte die Gondelposition sich selbst bei plötzlichen stärkeren Windrichtungsänderungen nicht ändern, da ein anfliegender Helikopterpilot die Gondel der Windenergieanlage als Fixpunkt benötigt.

Insbesondere sicherheits- und effizienzrelevante Eintrittsbedingungen sind das Überschreiten einer ersten Grenzwindgeschwindigkeit, einer ersten Grenzwellenhöhe bei Offshore-Windenergieanlagen, einer ersten Grenzturmschwingungsamplitude oder einer ersten Tierkollisionswahrscheinlichkeit. Beim Überschreiten der ersten Grenzwindgeschwindigkeit oder der ersten Grenzwellenhöhe kann beispielsweise eine Windnachführung mit einem Offsetwinkel bzw. Differenzwinkel als Azimut-Sonderposition eingestellt werden, um die Belastung der Windenergieanlage zu vermindern, ohne die Windenergieanlage stillsetzen zu müssen. Die Wellenhöhe bei Offshore-Windenergieanlagen und die Turmschwingungsamplitude sind ebenfalls belastungs- und somit sicherheits- und effizienzrelevant. Alle diese Grenzwerte sind anlagen- und/oder standortspezifisch auswählbar und den mit ihnen verbundenen Azimut-Sondersteuerungen wird gegebenenfalls eine hohe Priorität zugewiesen..

Ebenfalls Gegenstand einer Auflage einer Baugenehmigung kann ein Tier- oder Artenschutz sein, der bezüglich gefährdeter Flugtiere, etwa Fledermäusen oder gefährdeten Vögeln, besteht. Bei bekannten Orten der Brutgebiete und möglicher Einflugschneisen solcher Tiere kann die Windenergieanlage ebenfalls in ihrem Azimutwinkel in einer Sonderposition verfahren werden, um die Kollisionswahrscheinlichkeit zu vermindern.

Eine Windnachführungsbedingung bei Rotorarretierung oder bei Starkwind, insbesondere eine automatische Windnachführung, dient ebenfalls zur Lastenreduktion. Den mit diesen Betriebszuständen verbundenen Azimut-Sondersteuerungen kann beispielsweise eine mittlere Priorität zugewiesen werden.

Eine Servicearbeit, für die eine erfindungsgemäße Azimut-Sondersteuerung besonders nützlich ist, ist insbesondere die Benutzung einer Wartungsbühne für ein Rotorblatt, die die Aufstellung der Wartungsbühne an einer bestimmten Stelle erfordert. Das Gleiche gilt für das Aufstellen eines Hilfskrans mit Seilwinden oder Umlenkrollen am Boden. Auch ein Getriebeölwechsel mit Schlauchverbindung oder das Aufholen eines Werkzeugs oder von Komponenten, insbesondere Offshore, kann das Verfahren der Maschinengondel in eine Azimut-Sonderposition erfordern. Solche Betriebszustände gehen gegebenenfalls mit niedrigen Prioritäten der entsprechenden Azimut-Sondersteuerungen einher.

Als Austrittsbedingung oder Austrittsbedingungen einer oder mehrerer Azimut-Sondersteuerungen wird oder werden vorzugsweise ein Zeitpunkt, eine Zeitverzögerung, eine Beendigung eines Servicevorgangs, ein Helikopter-Abflug, eine Beendigung einer zu vermeidenden Schattenwurf- oder Reflektionslage, eine vorhandene oder zu erwartende Rotorvereisung, ein Unterschreiten einer zweiten Grenzwindgeschwindigkeit, einer zweiten Grenzwellenhöhe bei Offshore-Windenergieanlagen, einer zweiten Grenzturmschwingungsamplitude, einer zweiten Tierkollisionswahrscheinlichkeit und/oder einer Windnachführungsbedingung bei Rotorarretierung oder bei Starkwind angewendet.

Die zweiten Grenzgeschwindigkeiten, Grenzwellenhöhen, Grenzturmschwingungsamplituden und Tierkollisionswahrscheinlichkeiten liegen insbesondere unterhalb der jeweils ersten entsprechenden Grenzwerte, sie können jedoch auch den gleichen Wert annehmen, wie die entsprechenden ersten Grenzwerte. Auch diese Grenzwerte sind anlagen- und/oder standortspezifisch auswählbar.

Da Windenergieanlagen in ihrer Azimutsteuerung üblicherweise eine automatische Kabelentdrillung implementiert haben, ist vorgesehen, dass in der Azimut-Sondersteuerung zur Bestimmung der Verfahrrichtung der Maschinengondel eine Kabelverdrillung von Kabeln zwischen der Maschinengondel und dem Turm berücksichtigt wird, wobei insbesondere die Kabelverdrillung und die Priorität einer aktuellen Azimut-Sondersteuerung berücksichtigt werden.

Zusätzlich hierzu wird die Maschinengondel in der Azimut-Sondersteuerung in die Richtung einer Kabelentdrillung und/oder auf kürzestem Wege zur Azimut-Sonderposition verfahren. Wenn die Gondel in Richtung einer Kabelentdrillung verfahren wird, wird in jedem Fall vermieden, dass während der Ausführung einer Azimut-Sondersteuerung bei Überschreitung des Grenzwerts für die Kabelverdrillung die automatische Kabelentdrillung aktiviert wird Ein Verfahren auf kürzestem Wege vermindert die Wartezeit. Die Richtung des kürzesten Weges kann auch die Richtung der Kabelentdrillung sein.

Durch oben ebenfalls genannte gemeinsame Berücksichtigung von Kabelverdrillung und Priorität wird ein Kompromiss zwischen der Wichtigkeit des aktuellen Azimut-Sonderpositionsfalles und der aktuellen Notwendigkeit einer Kabelentdrillung gefunden werden. Beispielsweise kann bei Azimut-Sondersteuerungen mit höchster Priorität, etwa bei sicherheitsrelevanten Betriebsfällen wie akuter Vereisung oder Störungen bei Sturm, die Gondel auf kürzestem Wege zur Azimut-Sonderposition verfahren werden, solange der maximal zulässige Kabelverdrillwinkel nicht überschritten wird. Bei mittlerer oder niedriger Priorität hat beispielsweise die Kabelentdrillung Vorrang, solange keine unzumutbaren Wartezeiten entstehen, wobei die zumutbare Wartezeit bei niedriger Priorität größer sein darf als bei mittlerer Priorität. Hierzu wird vorzugsweise zu jeder Azimut-Sondersteuerung ein, insbesondere prioritätsabhängiger, Kabelentdrillungsverfahrwinkelgrenzwert definiert. Dieser ist so definiert, dass, wenn der Verfahrwinkel zur jeweiligen Azimut-Sonderposition in Richtung einer Kabelentdrillung den entsprechenden Kabelentdrillungsverfahrwinkelgrenzwert überschreitet, die Gondel in die entgegengesetzte Richtung verfahren wird, um keine übermäßige Wartezeit zu generieren. Beispielhaft sind bevorzugte Kabelentdrillungsverfahrwinkelgrenzwerte für Azimut-Sondersteuerungen mit niedriger Priorität anlagenabhängig im Bereich von 240° bis 340°, insbesondere von 270° bis 310° zu wählen, für mittlere Priorität von 190° bis 270°, insbesondere von 215° bis 245°.

Insbesondere zur Informierung eines wartenden Service-Dienstes, aber auch zu anderen Gelegenheit, ist vorzugsweise vorgesehen, dass signalisiert wird, wenn die Azimut-Sonderposition erreicht ist, insbesondere mittels eines Hindernisfeuers, einer Signalleuchte, akustisch oder mittels Meldung an eine Fernüberwachung.

In einigen Fällen, insbesondere wenn die Eintrittsbedingung für mehrere Windenergieanlagen eines Windparks eintritt, erfolgt eine Aktivierung der Azimut-Sondersteuerung für eine Mehrzahl von Windenergieanlagen eines Windparks mittels einer Windparksteuerung. Dies können die sicherheitsrelevanten Eintrittsbedingungen sein wie das Überschreiten eines Grenzwertes für einen sicherheitsrelevanten Parameter. Dies kann auch beispielsweise das Detektieren eines erhöhten Tierkollisionsrisikos sein oder entsprechende andere Parameter, die nicht notwendigerweise eine einzelne Windenergieanlage betreffen.

Eine weitere bevorzugte Anwendung einer Azimut-Sondersteuerung besteht in einer Überprüfung von Azimut-Referenzpositionen, wobei mehreren oder allen Windenergieanlagen eines Windparks über die gemeinsame Windparksteuerung eine, insbesondere gleiche, Azimut-Sonderposition vorgegeben wird. Fehlausrichtungen einzelner Windturbinen finden in der Praxis immer wieder statt, wenn bei der Inbetriebnahme der Windenergieanlage die Azimut-Referenzposition nicht beispielsweise mittels GPS- oder Kompasspeilung sorgfältig eingemessen wird. Beispielsweise mit einem Fernglas kann in diesem Fall ein Beobachter vorteilhaft und einfach überprüfen, ob alle Windenergieanlagen des Windparks identisch, also mit der gleichen Azimut-Sonderposition, ausgerichtet sind.

Diese Azimut-Sonderposition ist vorteilhafterweise auf die Blickrichtung des Beobachters in Bezug auf den Windpark oder in Bezug auf die einzelne Windenergieanlage des Windparks bezogen. Wenn sie vorteilhafterweise etwa 90° beträgt, also senkrecht zur Blickrichtung des Betrachters ist, können auch geringfügige Fehlausrichtungen einfach erkannt werden, da sich dann die Rotorblätter des Rotors für den Beobachter nicht in einer Ebene befinden. Die Azimut-Sonderposition jeder Windenergieanlage des Windparks kann auch individuell bezogen auf die, beispielsweise mittels GPS ermittelte, Position des Beobachters berechnet und vorgegeben werden. In diesem Fall wird zusammen mit dem Befehl zur Einleitung der Azimut-Sondersteuerung vorzugsweise die Position des Betrachters übermittelt, wobei die Azimutsteuerungen der Windenergieanlagen die Berechnung der einzustellenden Gondelausrichtung anhand der übermittelten Position des Betrachters und ihrer eigenen Position berechnet.

In einer vorteilhaften Erweiterung des Verfahrens ist ein Navigationssystem eines Servicefahrzeuges so ausgebildet, dass bei Anwahl oder Annäherung an eine Windenergieanlage, insbesondere bei Unterschreiten einer Grenzentfernung zur Windenergieanlage und/oder einer Grenz-Verzögerungszeit bis zur Ankunft, automatisch eine Serviceanfrage von dem Navigationssystem oder einer Fernüberwachungs-Zentrale an die Windenergieanlage oder an eine Fernüberwachungszentrale versendet wird, die von der Windenergieanlage als Eintrittsbedingung oder Anfrage für ein Verfahren in eine Azimut-Sonderposition erkannt wird. Auf diese Weise können Service-Anfragen automatisch abgesetzt werden und die Wartezeiten für Service-Teams verringert werden. Dies umfasst mehrere mögliche Fälle. So kann bei Anwahl des Standorts der Windenergieanlage bei Fahrtantritt bereits die berechnete Ankunftszeit übermittelt werden, zu der die Azimut-Sonderposition eingenommen sein soll. Dies kann ggfs. während der Anfahrt aktualisiert oder korrigiert werden. Ebenso kann der Einfachheit halber lediglich die Position des Servicefahrzeugs an die Windenergieanlage oder eine Fernüberwachungszentrale übermittelt werden und die voraussichtliche Ankunftszeit dort ermittelt werden. Die Anforderung der Azimut-Sonderposition erfolgt dann entweder sofort für die voraussichtliche Ankunftszeit oder bei Unterschreiten einer Grenz-Entfernung oder einer Grenz-Verzögerungszeit.

Die der Erfindung zugrunde liegende Aufgabe wird auch durch eine Windenergieanlage mit einem Turm sowie einer auf dem Turm drehbar angeordneten Maschinengondel mit einem Rotor gelöst, die weiter eine Steuereinheit mit einer Azimutsteuerung umfasst, die ausgebildet ist, ein erfindungsgemäßes zuvor beschriebenes Verfahren auszuführen. Eine solche Steuereinheit kann als programmierbare Datenverarbeitungsanlage oder auch als fest verdrahtete Schaltlogik ausgeführt sein.

In einer bevorzugten Ausführungsform weist die Steuereinheit einen oder mehrere Statuscodes auf, mit dem oder denen das Eintreten von Eintrittsbedingungen und/oder Austrittsbedingungen bezüglich einer oder mehrerer Zustandsgrößen und/oder Betriebsgrößen überwacht wird, wobei insbesondere für verschiedene Statuscodes verschiedene Prioritäten zur Verarbeitung der mit ihnen verbundenen Azimut-Sondersteuerungsprogramme vorgesehen sind. Dies stellt eine simple und in computergestützten Steuereinheiten leicht zu implementierende Ausführungsform dar.

Die der Erfindung zugrunde liegende Aufgabe wird auch durch ein Computerprogrammprodukt mit Programmcodemitteln gelöst, bei deren Ausführung in einer als Datenverarbeitungsanlage ausgebildeten Steuereinheit einer Windenergieanlage ein erfindungsgemäßes oben beschriebenes Verfahren zum Betreiben einer Windenergieanlage ausgeführt wird.

Die zu den genannten Erfindungsgegenständen, also dem Verfahren, der Windenergieanlage und dem Computerprogrammprodukt genannten Merkmale, Eigenschaften und Vorteile gelten ohne Einschränkung auch für die jeweils anderen Erfindungsgegenstände.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung einer Azimut-Sonderposition,
- Fig. 2: eine weitere schematische Darstellung von Azimut-Sonderpositionen,
- Fig. 3: eine schematische Darstellung einer bespielhaften Implementierung von Azimut-Sondersteuerungen,
- Fig. 4: eine Ablaufschematik für eine Azimutsteuerung und
- Fig. 5: eine Ablaufschematik zur Feststellung einer Azimut-Verfahrrichtung.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

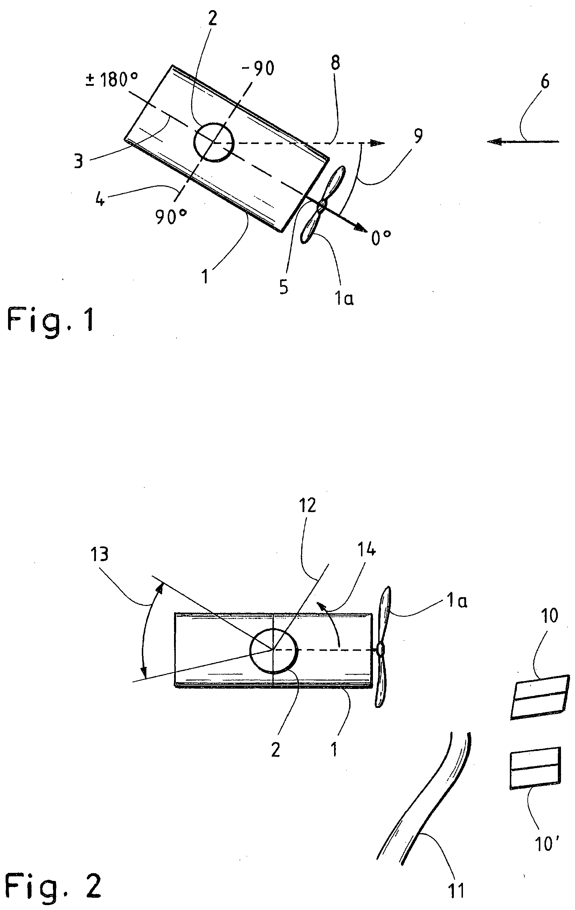

In Fig. 1 ist in schematischer Darstellung eine Maschinengondel 1 einer Windenergieanlage mit einem Rotor 1a auf einem Turm 2 dargestellt. Die Rotorachse bzw. Rotornabe definiert eine Richtung 5, die mit 0° bezeichnet wird. Das Maschinengehäuse 1 definiert eine Längsachse, die zur Rückseite der Maschinengondel 1 eine Richtung 180° definiert und eine Querachse 4, die Richtung 90° und -90° zur Längsachse 3 definieren. Diese Winkelangaben beziehen sich auf das interne Koordinatensystem der Maschinengondel 1.

Eine Windrichtung 6 ist schematisch dargestellt, die von der Richtung 5 der Rotornabe abweicht. Eine Offset-Richtung 8 weist in die Richtung, aus der der Wind kommt. Zwischen dieser Offset-Richtung 8 und der 0°-Richtung 5 der Rotornabe liegt ein Offset-Azimutwinkel 9. Eine mögliche Azimut-Sondersteuerung besteht darin, eine automatische Windnachführung mit dem entsprechenden Offset-Azimutwinkel 9 zu betreiben, um Lasten auf die Windenergieanlage zu reduzieren.

In Fig. 2 ist eine weitere schematische Draufsicht von oben auf eine Maschinengondel 1 gezeigt, wobei weiterhin ortsfeste bodenständige Strukturen, nämlich Gebäude 10, 10' und ein Zufahrtsweg 11 dargestellt sind. Bezüglich der bodenständigen Strukturen kann es vorteilhaft sein, eine Azimut-Sonderposition in Form einer festen Winkelposition 12 oder eines Winkelsektors 13 zu wählen, innerhalb dessen eine Azimut-Sonderposition eingenommen wird. Im dargestellten Fall könnte zum Schutz der Gebäude 10, 10' und des Zufahrtswegs 11 bevorzugt eine Sonderazimutposition im Winkelsektor 13, also mit einer grob um 180° von den Gebäuden 10, 10' und dem Zufahrtsweg 11 weg gedrehten Gondelposition, gewählt werden.

Für das Beispiel einer Azimut-Sondersteuerung, die ein Verfahren zu der Winkelposition 12 vorsieht, ist die Verfahrrichtung 14 mit einem Pfeil angegeben und bedeutet den kürzesten Verfahrweg, solange dies nicht zu einer automatischen Kabelentdrillung führt. Im letzteren Fall müsste die Verfahrrichtung 14 umgedreht werden. Dies führt auch zu einer teilweisen Entdrillung der Kabel.

Wenn alternativ der Winkelsektor 13 in einer Azimut-Sondersteuerung angefahren werden soll, hat die Maschinengondel 1 in der in Fig. 2 dargestellten Situation die Möglichkeit, in oder entgegen der Verfahrrichtung 14 zu verfahren. In beiden Fällen wird das Verfahren beendet, sobald der Winkelsektor 13 erreicht wird. Dies kann alternativ bezüglich des kürzesten Weges oder bezüglich einer Richtung einer Kabelentdrillung geschehen. Insbesondere, wenn sich die Verfahrwege, wie in dem in Fig. 2 dargestellten Beispiel, nur wenig unterscheiden, kann eine Kabelentdrillung beispielsweise priorisiert werden.

Die Winkelposition 12 bzw. der Winkelsektor 13 sollten so gewählt sein, dass entweder eine besonders einfache Anfahrt von dem Zufahrtsweg 11 ermöglicht wird oder eine Gefahrenreduzierung bei Rotorenteisung stattfindet, so dass Eis nicht mehr auf die Gebäude 10, 10' fallen kann. Auch eine Schattenwurfvermeidung oder eine Reflektionsvermeidung bei entsprechendem Sonnenstand kann hierdurch erreicht werden. Eine solche Azimut-Sonderposition kann daher individuell anlagen- bzw. standort-spezifisch gespeichert werden, insbesondere auch für verschiedene Auswahloptionen, beispielsweise bezüglich Vereisung, Rotorblattwartung, Installation eines Hilfskrans oder eines Ölwechsels.

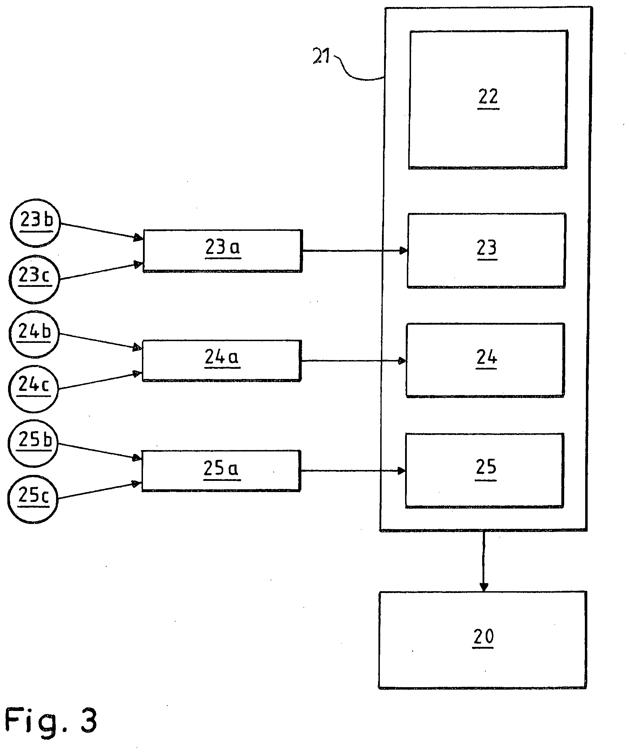

In Fig. 3 ist schematisch eine beispielhafte Implementierung einer Azimut-Sondersteuerung dargestellt. Die allgemeine Windenergieanlagensteuerung 20, die den gesamten Betrieb der Windenergieanlage steuert, wird unter anderem durch eine Azimutsteuerung 21 angesteuert, die beispielsweise als Computerprogramm mit verschiedenen Subroutinen ausgeführt sein kann. Eine Subroutine ist in diesem Fall innerhalb der Azimutsteuerung 21 ein Standard-Azimutsteuerprogramm 22, das den Betrieb der Azimutsteuerung 21 im Normalfall betrifft. Neben dem Standard-Azimutsteuerprogramm 22 sind im Ausführungsbeispiel gemäß Fig. 3 drei Sondersteuerprogramme 23, 24 und 25 vorgesehen, die in der Reihenfolge abnehmende Priorität haben, nämlich beispielsweise Priorität 1 für das Steuerprogramm 23, Priorität 2 für das Steuerprogramm 24 und Priorität 3, also die niedrigste Priorität, für das Steuerprogramm 25. Mit jedem der Steuerprogramme 23, 24, 25 ist eine eigene Azimut-Sonderposition verknüpft.

Jedes der Sondersteuerprogramme ist mit einem Statuscode 23a, 24a, 25a verbunden, die bei Eintreten des Statuscodes 23a, 24a, 25a dazu führen, dass das entsprechende Sondersteuerprogramm 23, 24, 25 ausgeführt wird. Der jeweilige Statuscode 23a, 24a, 25a wird gesetzt, wenn eine Eintrittsbedingung 23b, 24b, 25b vorliegt. Das Zurücksetzen des Statuscodes 23a, 24a, 25a und das daraus folgende Beenden des Sondersteuerprogramms 23, 24, 25 erfolgt, abhängig von der Auswahl der im Statuscode 23a, 24a, 25a verwendeten Logik entweder, wenn die Eintrittsbedingung 23b, 24b, 25b nicht mehr vorliegt, oder wenn eine Austrittsbedingung 23c, 24c, 25c eintritt. Eintrittsbedingung 23b, 24b, 25b und Austrittsbedingung 23c, 24c, 25c können auch noch individueller miteinander logisch verknüpft werden.

Der entsprechende Statuscode 23a, 24a, 25a aktiviert und deaktiviert somit das entsprechende damit verbundene Sondersteuerprogramm 23, 24, 25, wobei eine interne Prioritätslogik in der Azimutsteuerung auswählt, welches der Steuerprogramme 23, 24, 25 ausgeführt wird. Die entsprechende Steuerung oder Sondersteuerung wird dann an die Steuerung 20 übermittelt, die diese ausführt.

Mit der erfindungsgemäßen Azimut-Sondersteuerungsfunktion, die wie in Fig. 3 implementiert sein kann, sind mögliche Anwendungsfälle behandelbar, wie eine Gefahrenreduzierung bei Rotorvereisung, ein Helikopteranflug, insbesondere bei Offshore-Windenergieanlagen, das Ausführen und Einleiten von Servicearbeiten, insbesondere mit einer Wartungsbühne am Rotorblatt, bei der Installation von Hilfskränen mit Seilwinden oder Umlenkrollen am Boden, Getriebeölwechsel mit Schlauchverbindung oder das Aufholen von Werkzeugen und/oder Komponenten, insbesondere offshore. Schattenwurf oder Reflektion können vermieden werden, ebenso wie eine Reduzierung einer Tierkollisionsgefahr erreicht werden kann. Auch eine automatische Windnachführung bei Rotorarretierung oder bei Starkwind zur Lastenreduktion ist so möglich.

Der Positioniervorgang kann außerdem automatisch deaktiviert werden durch bestimmte Ereignisse, zu einer vorgegebenen Uhrzeit oder nach einer vorgegebenen Verzögerungszeit.

Es ergeben sich die Vorteile einer Zeitersparnis beim Service, da Service-Personal nicht warten muss. Eine Ertragsmaximierung wird unter anderem dadurch erreicht, dass der Produktionsbetrieb erst zum spätest möglichen Zeitpunkt unterbrochen werden muss. Bezüglich Fehlbedienungen werden Gefahren vermieden. Es werden Lasten reduziert, beispielsweise durch die Auswahl eines Azimuts bei Rotorarretierung.

Zusätzliche in Fig. 3 nicht dargestellte Steuerfunktionen betreffen die Überprüfung der Kabelentdrillung zur Bestimmung der Verfahrrichtung, eine Überprüfung der zulässigen Grenzwindgeschwindigkeit oder eine Errechnung einer benötigten Nachführzeit oder eines Nachführstartzeitpunkts. Weiter können eine Verriegelung der Kabelentdrillung und/oder eine manuelle Nachführung im Status der Sondersteuerung vorgesehen sein.

Ebenfalls nicht dargestellt ist, dass signalisiert wird, wenn eine Azimut-Sonderposition erreicht wird. Dies kann durch ein Hindernisfeuer, eine Signalleuchte, akustisch oder in einer Fernüberwachung passieren.

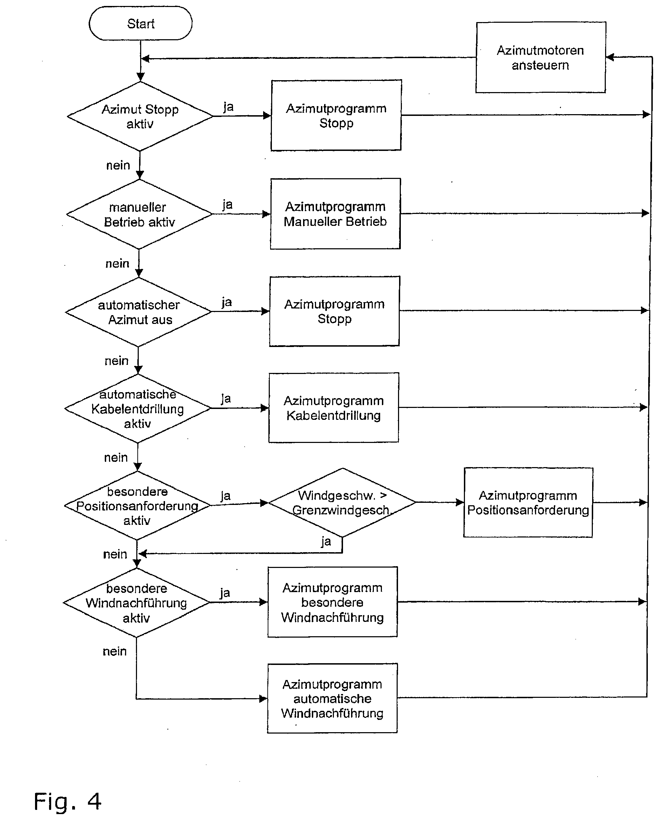

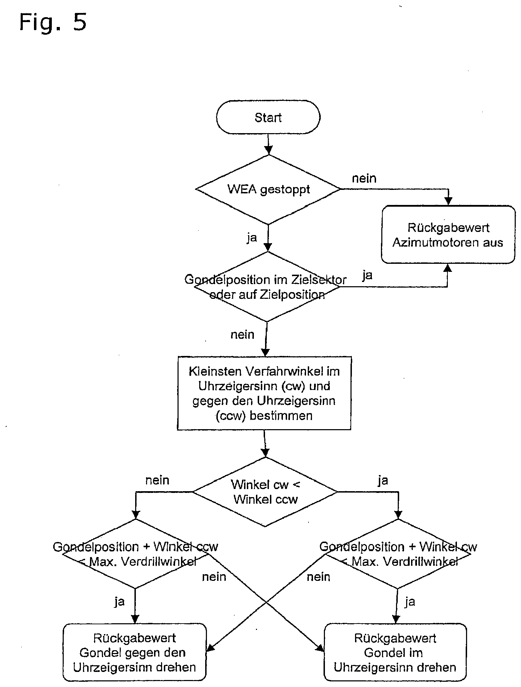

In den Fig. 4 und 5 sind schematische Ablaufdiagramme für eine erfindungsgemäße Azimutsteuerung dargestellt. In Rauten sind Entscheidungsverzweigungen dargestellt, die, je nach Antwort, zu verschiedenen Aktionen führen. Aktionen oder Azimutsonderprogramme sind in rechteckigen Feldern gezeigt.

In Fig. 4 ist ein Ablaufschema eines Azimut-Steuerprogramms dargestellt, das im Betrieb einer Windenergieanlage beispielsweise alle 10 Millisekunden durchlaufen wird. Nach dem Start der Azimutsteuerung erfolgt zunächst eine Abfrage, ob ein Azimutstopp aktiv ist. Falls dies der Fall ist, wird das Azimutprogramm gestoppt. Dadurch werden die Azimutmotoren angesteuert, um diese zu deaktivieren.

Falls der Azimutstopp nicht aktiv ist, wird überprüft, ob ein manueller Betrieb aktiv ist. Falls dies bejaht wird, erfolgt ein Azimutprogramm "manueller Betrieb", so dass die Azimutmotoren manuell angesteuert werden.

Falls der manuelle Betrieb nicht aktiv ist, wird abgefragt, ob ein automatischer Azimut aus ist. Falls dies bejaht wird, so wird das Azimutprogramm wiederum gestoppt und die Azimutmotoren so angesteuert, dass diese abgestellt werden.

Falls der automatische Azimut nicht aus ist, wird überprüft, ob eine automatische Kabelentdrillung aktiv ist. Falls dies bejaht wird, wird ein Azimutprogramm "Kabelentdrillung" angesteuert und die Azimutmotoren dementsprechend zum Entdrillen der Kabel angesteuert.

Falls die automatische Kabelentdrillung nicht aktiv ist, wird überprüft ob eine besondere Positionsanforderung gestellt wurde. Falls dies der Fall ist, wird außerdem überprüft, ob die herrschende Windgeschwindigkeit oberhalb einer vorbestimmten Grenzwindgeschwindigkeit ist. Nur wenn dieses nicht der Fall ist, wird ein Azimutprogramm "Positionsanforderung" für die besondere Positionsanforderung aktiviert und die Azimutmotoren so angesteuert, dass die angeforderte Position angesteuert wird.

Falls allerdings eine besondere Positionsanforderung nicht aktiv ist oder die Windgeschwindigkeit oberhalb der Grenzwindgeschwindigkeit ist, wird abgefragt, ob eine besondere Windnachführung aktiv ist. Falls dies der Fall ist, wird ein Azimutprogramm "besondere Windnachführung" angesteuert. Falls nicht, wird das allgemeine Azimutprogramm "automatische Windnachführung" ausgeführt, das den normalen Betrieb der Windenergieanlage darstellt.

In jedem Fall wird nach einer Ansteuerung der Azimutmotoren die Entscheidungskette erneut durchlaufen.

Bei dem Ablaufschema gemäß Fig. 4 können die Abfragen nach der automatischen Kabelentdrillung und nach der besonderen Positionsanforderung auch ausgetauscht werden. Dies rührt daher, dass die Kabelentdrillung im Azimutprogramm "Positionsanforderung" ebenfalls berücksichtigt wird.

Die automatische Kabelentdrillung kann beispielsweise aktiviert werden, wenn die Steuerung erkennt, dass durch die Azimutsteuerung inzwischen die Gondel so weit in eine Richtung verfahren worden ist, dass die Kabel verdrillt sind und entdrillt werden müssen.

In Fig. 5 ist ein Ablaufdiagramm gezeigt, das es ermöglicht zu ermitteln, in welche Richtung eine Azimutsteuerung geschehen soll. Nach dem Start dieser Abfrage wird zunächst abgefragt, ob die Windenergieanlage gestoppt ist. Falls dies verneint wird, wird als Rückgabewert gegeben, dass die Azimutmotoren ausgestellt werden. Falls die Windenergieanlage tatsächlich gestoppt ist, wird abgefragt, ob die Gondelposition im Zielsektor oder auf einer Zielposition ist. Falls dies bejaht wird, wird ebenfalls der Rückgabewert "Azimutmotoren aus" gegeben.

Falls die Gondelposition nicht im Zielsektor oder auf der Zielposition ist, wird der kleinste Verfahrwinkel einerseits im Uhrzeigersinn (cw = clockwise) und andererseits gegen den Uhrzeigersinn (ccw = counter-clockwise) bestimmt. Anschließend werden die beiden Winkel miteinander verglichen.

Falls der Verfahrwinkel im Uhrzeigersinn kleiner ist als der Verfahrwinkel im Gegenuhrzeigersinn, wird als nächstes überprüft, ob die Gondelposition plus der Verfahrwinkel in Uhrzeigerrichtung kleiner ist als der maximale Verdrillwinkel. Falls dies der Fall ist, wird als Rückgabewert gegeben, dass die Gondel im Uhrzeigersinn gedreht werden soll. Falls nicht, wird als Rückgabewert gegeben, dass die Gondel gegen den Uhrzeigersinn gedreht werden soll.

Falls der kleinste Verfahrwinkel im Uhrzeigersinn größer ist als der Verfahrwinkel im Gegenuhrzeigersinn, erfolgt die Gegenprüfung, ob die Gondelposition plus der Winkel im Gegenuhrzeigersinn kleiner ist als ein maximaler Verdrillwinkel. Falls dies der Fall ist, wird als Rückgabewert ausgegeben, dass die Gondel gegen den Uhrzeigersinn zu drehen ist, andernfalls wird als Rückgabewert gegeben, dass die Gondel im Uhrzeigersinn zu drehen ist. Auf diese Weise wird sichergestellt, dass die Gondel nicht über den maximalen Verdrillwinkel hinaus gedreht wird.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 1: Maschinengondel
- 1a: Rotor
- 2: Turm
- 3: Längsachse
- 4: Querachse
- 5: Richtung der Rotornabe
- 6: Windrichtung
- 8: Offset-Richtung
- 9: Offset-Azimutwinkel
- 10, 10': Gebäude
- 11: Zufahrtsweg
- 12: Winkelposition
- 13: Winkelsektor
- 14: Verfahrrichtung
- 20: Steuerung
- 21: Azimutsteuerung
- 22: Standard-Azimutsteuerprogramm
- 23: Sondersteuerprogramm A
- 23a: Statuscode A
- 23b: Eintrittsbedingung A
- 23c: Austrittsbedingung A
- 24: Sondersteuerprogramm B
- 24a: Statuscode B
- 24b: Eintrittsbedingung B
- 24c: Austrittsbedingung B
- 25: Sondersteuerprogramm C
- 25a: Statuscode C
- 25b: Eintrittsbedingung C
- 25c: Austrittsbedingung C

## Patentansprüche

1. Verfahren zum Betreiben einer Windenergieanlage mit einem Turm (2) sowie einer auf dem Turm (2) drehbar angeordneten Maschinengondel (1) mit einem Rotor (1a), wobei die Maschinengondel (1) mittels wenigstens einer in einer Azimutsteuerung (21) der Windenergieanlage implementierten Azimut-Sondersteuerung (23, 24, 25) zu einer, insbesondere vorbestimmten oder vorbestimmbaren, Azimut-Sonderposition (9, 12, 13) verfahren wird, wenn eine in der Azimut-Sondersteuerung (23, 24, 25) definierte Eintrittsbedingung (23b, 24b, 25b) erfüllt ist, **dadurch gekennzeichnet, dass** mehrere verschiedene Azimut-Sondersteuerungen (23, 24, 25) mit jeweils unterschiedlichen Eintrittsbedingungen (23b, 24b, 25b) und/oder Austrittsbedingungen (23c, 24c, 25c) implementiert sind, die jeweils mit der gleichen Azimut-Sonderposition (9, 12, 13) oder mit verschiedenen Azimut-Sonderpositionen (9, 12, 13) verbunden sind, wobei verschiedenen Azimut-Sondersteuerungen (23, 24, 25) in der Azimutsteuerung (21) verschiedene Prioritäten zugewiesen sind, wobei bei Erfüllung mehrerer Eintrittsbedingungen (23b, 24b, 25b) und/oder Austrittsbedingungen (23c, 24c, 25c) diejenige Azimut-Sondersteuerung (23, 24, 25) mit der höchsten Priorität ausgeführt wird, wobei in der Azimut-Sondersteuerung (23, 24, 25) zur Bestimmung der Verfahrrichtung (14) eine Kabelverdrillung von Kabeln zwischen der Maschinengondel (1) und dem Turm (2) berücksichtigt wird, wobei die Kabelverdrillung und die Priorität einer aktuellen Azimut-Sondersteuerung (23, 24, 25) berücksichtigt werden, wobei die Maschinengondel (1) in der Azimut-Sondersteuerung (23, 24, 25) je nach Priorität der Azimut-Sondersteuerung (23, 24, 25) in die Richtung einer Kabelentdrillung und/oder auf kürzestem Wege zur Azimut-Sonderposition (9, 12, 13) verfahren wird.

2. Verfahren nach Anspruch 1, **dadurch gekennzeichnet, dass** die Azimut-Sonderposition (9, 12, 13) eine windrichtungsunabhängige Winkelposition (12) oder ein windrichtungsunabhängiger Winkelsektor (13) oder ein vorgegebener oder vorgebbarer Differenzwinkel (9) zur Windrichtung (6) ist.

3. Verfahren nach Anspruch 1 oder 2, **dadurch gekennzeichnet, dass** die Azimut-Sondersteuerung (23, 24, 25) beendet wird, wenn die Eintrittsbedingung (23b, 24b, 25b) der Azimut-Sondersteuerung (23, 24, 25) nicht mehr erfüllt ist und/oder eine Austrittsbedingung (23c, 24c, 25c) zur Azimut-Sondersteuerung (23, 24, 25) erfüllt ist.

4. Verfahren nach einem der Ansprüche 1 bis 3, **dadurch gekennzeichnet, dass** als Eintrittsbedingung (23b, 24b, 25b) oder Eintrittsbedingungen (23b, 24b, 25b) einer oder mehrerer Azimut-Sondersteuerungen (23, 24, 25) ein Zeitpunkt, eine Zeitverzögerung, eine Serviceanfrage, ein Helikopter-Anflug, ein Eintritt einer zu vermeidenden Schattenwurf- oder Reflektionslage, eine vorhandene oder zu erwartende Rotorvereisung, ein Überschreiten einer ersten Grenzwindgeschwindigkeit, einer ersten Grenzwellenhöhe bei Offshore-Windenergieanlagen, einer ersten Grenzturmschwingungsamplitude, einer ersten Tierkollisionswahrscheinlichkeit und/oder eine Windnachführungsbedingung bei Rotorarretierung oder bei Starkwind angewendet wird oder werden.

5. Verfahren nach einem der Ansprüche 1 bis 4, **dadurch gekennzeichnet, dass** als Austrittsbedingung (23c, 24c, 25c) oder Austrittsbedingungen (23c, 24c, 25c) einer oder mehrerer Azimut-Sondersteuerungen (23, 24, 25) ein Zeitpunkt, eine Zeitverzögerung, eine die Beendigung eines Servicevorgangs, ein Helikopter-Abflug, eine Beendigung einer zu vermeidenden Schattenwurf- oder Reflektionslage, eine vorhandene oder zu erwartende Rotorvereisung, ein Unterschreiten einer zweiten Grenzwindgeschwindigkeit, einer zweiten Grenzwellenhöhe bei Offshore-Windenergieanlagen, einer zweiten Grenzturmschwingungsamplitude, einer zweiten Tierkollisionswahrscheinlichkeit und/oder einer Windnachführungsbedingung bei Rotorarretierung oder bei Starkwind angewendet wird oder werden.

6. Verfahren nach einem der Ansprüche 1 bis 5, **dadurch gekennzeichnet, dass** signalisiert wird, wenn die Azimut-Sonderposition erreicht (9, 12, 13) ist, insbesondere mittels eines Hindernisfeuers, einer Signalleuchte, akustisch oder mittels Meldung an eine Fernüberwachung.

7. Verfahren nach einem der Ansprüche 1 bis 6, **dadurch gekennzeichnet, dass** eine Aktivierung der Azimut-Sondersteuerung (23 - 23c, 24 - 24c, 25 - 25c) für eine Mehrzahl von Windenergieanlagen eines Windparks mittels einer Windparksteuerung erfolgt.

8. Verfahren nach einem der Ansprüche 1 bis 7, **dadurch gekennzeichnet, dass** ein Navigationssystem eines Servicefahrzeuges so ausgebildet ist, dass bei Anwahl oder Annäherung an eine Windenergieanlage, insbesondere bei Unterschreiten einer Grenzentfernung zur Windenergieanlage und/oder einer Grenz-Verzögerungszeit bis zur Ankunft, automatisch eine Serviceanfrage von dem Navigationssystem oder einer Fernüberwachungs-Zentrale an die Windenergieanlage oder an eine Fernüberwachungs-Zentrale versendet wird, die von der Windenergieanlage als Eintrittsbedingung (23b, 24b, 25b) oder Anfrage für ein Verfahren in eine Azimut-Sonderposition (9, 12, 13) erkannt wird.

9. Windenergieanlage mit einem Turm (2) sowie einer auf dem Turm (2) drehbar angeordneten Maschinengondel (1) mit einem Rotor (1a), weiter umfassend eine Steuereinheit mit einer Azimutsteuerung (21), **dadurch gekennzeichnet, dass** die Steuereinheit ausgebildet ist, ein Verfahren nach einem der Ansprüche 1 bis 10 auszuführen.

10. Windenergieanlage nach Anspruch 9, **dadurch gekennzeichnet, dass** die Steuereinheit einen oder mehrere Statuscodes (23a, 24a, 25a) aufweist, mit dem oder denen das Eintreten von Eintrittsbedingungen (23b, 24b, 25b) und/oder Austrittsbedingungen (23c, 24c, 25c) bezüglich einer oder mehrerer Zustandsgrößen und/oder Betriebsgrößen überwacht wird, wobei insbesondere für verschiedene Statuscodes (23a, 24a, 25a) verschiedene Prioritäten zur Verarbeitung der mit ihnen verbundenen Azimut-Sondersteuerungsprogramme (23, 24, 25) vorgesehen sind.

11. Computerprogrammprodukt mit Programmcodemitteln, bei deren Ausführung in einer als Datenverarbeitungsanlage ausgebildeten Steuereinheit einer Windenergieanlage ein Verfahren zum Betreiben der Windenergieanlage nach einem der Ansprüche 1 bis 8 ausgeführt wird.

## Claims

1. A method of operating a wind energy installation comprising a tower (2) as well as a nacelle (1) that is rotatably arranged on the tower (2) and which wind energy installation has a rotor (1a), wherein the nacelle (1) is moved, by means of at least one azimuth special control (23, 24, 25) which is implemented in an azimuth control (21) of the wind energy installation, into an azimuth special position (9, 12, 13), in particular into a predetermined or predeterminable azimuth special position (9, 12, 13), when an entrance condition (23b, 24b, 25b) defined in the azimuth special control (23, 24, 25) is satisfied, **characterised in that** a plurality of different azimuth special controls (23, 24, 25) are each implemented with different entrance conditions (23b, 24b, 25b) and / or exit conditions (23c, 24c, 25c), each of which are connected to the same azimuth special position (9, 12, 13) or to different azimuth special positions (9, 12, 13), wherein different priorities are assigned to different azimuth special controls (23, 24, 25) in the azimuth control (21), wherein, when a plurality of entrance conditions (23b, 24b, 25b) and / or exit conditions (23c, 24c, 25c) are satisfied, the azimuth special control (23, 24, 25) with the highest priority is executed, wherein a cable twist of cables between the nacelle (1) and the tower (2) is taken into consideration in the azimuth special control (23, 24, 25) in order to determine the direction of movement (14), wherein the cable twist and the priority of a current azimuth special control (23, 24, 25) are taken into consideration, wherein, in dependence upon the priority of the azimuth special control (23, 24, 25), the nacelle (1) is moved in the azimuth special control (23, 24, 25) in the direction of a cable untwist and / or along the shortest path to the azimuth special position (9, 12, 13).

2. The method according to claim 1, **characterised in that** the azimuth special position (9, 12, 13) is an angular position (12) which is independent of the wind direction, or an angular sector (13) which is independent of the wind direction, or a predetermined or predeterminable difference angle (9) with respect to the wind direction (6).

3. The method according to claim 1 or 2, **characterised in that** the azimuth special control (23, 24, 25) is ended when the entrance condition (23b, 24b, 25b) of the azimuth special control (23, 24, 25) is no longer satisfied, and / or an exit condition (23c, 24c, 25c) to the azimuth special control (23, 24, 25) is satisfied.

4. The method according to any one of claims 1 to 3, **characterised in that** a point in time, a time delay, a service request, an approach of a helicopter, an entering into a shadow or reflection position that is to be avoided, an existing or an anticipated icing up of the rotor, an exceeding of a first threshold wind speed, a first threshold wave height in the case of offshore wind energy installations, a first threshold amplitude of a tower oscillation, a first probability of a collision with an animal, and / or a condition for an adjustment depending on the prevailing wind in the event of a locking of the rotor or in the case of strong wind is or are used as an entrance condition (23b, 24b, 25b) or as entrance conditions (23b, 24b, 25b) of one or more azimuth special controls (23, 24, 25).

5. The method according to any one of claims 1 to 4, **characterised in that** a point in time, a time delay, an ending of a service process, a departure of a helicopter, an ending of a shadow or reflection position that is to be avoided, an existing or an anticipated icing up of the rotor, a dropping below a second threshold wind speed, a second threshold wave height in the case of offshore wind energy installations, a second threshold amplitude of a tower oscillation, a second probability of a collision with an animal, and / or a condition for an adjustment depending on the prevailing wind in the event of a locking of the rotor or in the case of strong wind is or are used as the exit condition (23c, 24c, 25c) or exit conditions (23c, 24c, 25c) of one or more azimuth special controls (23, 24, 25).

6. The method according to any one of claims 1 to 5, **characterised in that** a signal is emitted when the azimuth special position has been reached (9, 12, 13), in particular by means of an obstruction light, a signalling light, acoustically or by means of a notification to a remote monitoring centre.

7. The method according to any one of claims 1 to 6, **characterised in that** an activation of the azimuth special control (23 - 23c, 24 - 24c, 25 - 25c) takes place for a plurality of wind energy installations of a wind park by means of a wind park control.

8. The method according to any one of claims 1 to 7, **characterised in that** a navigation system of a service vehicle is constructed in such a way that, when a wind energy installation is selected or approached, in particular when a distance to the wind energy installation falls below a threshold distance and / or when a time period until arrival at the wind energy installation falls below a threshold delay period, a service request is automatically sent from the navigation system or from a remote monitoring centre to the wind energy installation or to a remote monitoring centre, which service request can be recognised by the wind energy installation as an entrance condition (23b, 24b, 25b) or as a request for moving into an azimuth special position (9, 12, 13).

9. A wind energy installation comprising a tower (2) as well as a nacelle (1) with a rotor (1a), which nacelle (1) is rotatably arranged on the tower (2), the wind energy installation further comprising a control unit with an azimuth control (21), **characterised in that** the control unit is constructed so as to carry out a method according to any one of claims 1 to 10.

10. The wind energy installation according to claim 9, **characterised in that** the control unit has one or more status codes (23a, 24a, 25a) with which the occurrence of entrance conditions (23b, 24b, 25b) and / or exit conditions (23c, 24c, 25c) is monitored with regard to one or more state variables and / or operating variables, in particular wherein different priorities are provided for processing the azimuth special control programs (23, 24, 25) associated therewith, in particular for different status codes (23a, 24a, 25a).

11. A computer program product with program code means, wherein, when they are being executed in a control unit of a wind energy installation constructed as a data processing system, a method of operating the wind energy installation according to any one of claims 1 to 8 is carried out.

## Revendications

1. Procédé pour faire fonctionner une éolienne ayant une tour (2) ainsi qu'une nacelle (1) agencée de manière rotative sur la tour (2) ayant une hélice (1a), dans lequel la nacelle (1) est déplacée dans une position spécifique d'azimut (9, 12, 13), en particulier prédéterminée ou apte à être prédéterminée, au moyen d'au moins une commande d'azimut spécifique (23, 24, 25) mise en oeuvre par une commande d'azimut (21) de éolienne, lorsque est satisfaite une condition d'entrée (23b, 24b, 25b) définie dans la commande spécifique d'azimut (23, 24, 25), **caractérisé en ce que** sont mises en oeuvre plusieurs commandes d'azimuts spécifiques (23, 24, 25) différentes, ayant chacune différentes conditions d'entrée (23b, 24b, 25b) et / ou conditions de sortie (23c, 24c, 25c), chacune étant reliée à la même position spécifique d'azimut (9, 12, 13) ou à des positions spécifiques d'azimut (9, 12, 13) différentes, différentes commandes spécifiques d'azimut (23, 24, 25) étant affectées à différentes priorités dans la commande d'azimut (21), dans lequel, dans le respect d'une pluralité de conditions d'entrée (23b, 24b, 25b) et / ou conditions de sortie (23c, 24c, 25c), ladite commande d'azimut spécifique (23, 24, 25) avec la priorité la plus haute est exécutée, dans lequel la commande d'azimut spécifique (23, 24, 25) pour déterminer la direction de déplacement (14) prend en compte une torsion des câbles reliant la nacelle (1) et la tour (2), dans lequel sont pris en compte la torsion de câble et la priorité d'une commande spécifique d'azimut (23, 24, 25) en cours, dans lequel il est procédé au déplacement de la nacelle (1) selon la commande spécifique d'azimut (23, 24, 25) dans la direction d'une détorsion de câble et / ou selon l'itinéraire le plus court vers la position particulière de l'azimut (9, 12, 13) en fonction de la priorité de la commande spécifique d'azimut (23, 24, 25).

2. Procédé selon la revendication 1, **caractérisé en ce que** la position spécifique d'azimut (9, 12, 13) est une position angulaire (12) indépendante du sens du vent ou un secteur angulaire (13) indépendant du sens du vent ou un angle de différence (9) prédéterminé ou apte à être prédéterminé par rapport à la direction du vent (6).

3. Procédé selon la revendication 1 ou la revendication 2, **caractérisé en ce que** la commande spécifique d'azimut (23, 24, 25) est achevée lorsque la condition d'entrée (23b, 24b, 25b) de la commande spécifique d'azimut (23, 24, 25) n'est plus satisfaite et / ou qu'une condition de sortie (23c, 24c, 25c) pour la commande spécifique d'azimut (23, 24, 25) est satisfaite.

4. Procédé selon l'une quelconque des revendications 1 à 3, **caractérisé en ce que** à titre de condition d'entrée (23b, 24b, 25b) ou de conditions d'entrée (23b, 24b, 25b) d'une ou plusieurs commandes spécifiques d'azimut (23, 24, 25) on utilise ou on est susceptible d'utiliser une durée, une temps de retard, une demande de service, une approche d'hélicoptère, une apparition de situation d'ombre portée ou de réflexion à éviter, un givrage de l'hélice existant ou prévu, un dépassement d'une première vitesse limite de vent, une première hauteur d'onde de vague limite pour des éoliennes offshore, une première amplitude limite d'oscillation de la tour, une première probabilité de collision d'animal et / ou une condition d'orientation par verrouillage de l'hélice ou par des vents forts.

5. Procédé selon l'une quelconque des revendications 1 à 4, **caractérisé en ce que** à titre de condition de sortie (23c, 24c, 25c) ou de conditions de sortie (23c, 24c, 25c) d'une ou plusieurs commandes spécifiques d'azimut (23, 24, 25) on utilise ou on est susceptible d'utiliser une durée, un temps de retard, un achèvement d'une opération de maintenance, un décollage d'hélicoptère, la fin d'une situation d'ombre portée ou de réflexion à éviter, un givrage de l'hélice existant ou prévu, la chute en dessous d'une seconde vitesse limite de vent, une seconde hauteur de vague limite pour des éoliennes offshore, une seconde amplitude limite d'oscillation de la tour, une seconde probabilité de collision d'animal et / ou une condition d'orientation par verrouillage de l'hélice ou par des vents forts.

6. Procédé selon l'une quelconque des revendications 1 à 5, **caractérisé en ce qu'**un signal est émis lorsque la position particulière de l'azimut est atteinte (9, 12, 13), en particulier au moyen d'un feu d'obstacle, d'un feu de signalisation, de façon acoustique ou au moyen d'un message à une surveillance à distance.

7. Procédé selon l'une des revendications 1 à 6, **caractérisé en ce que** l'activation de la commande spécifique d'azimut (23 - 23c, 24 - 24c, 25 - 25c) est réalisée pour une pluralité d'éoliennes d'un parc éolien au moyen d'un contrôle du parc éolien.

8. Procédé selon l'une quelconque des revendications 1 à 7, **caractérisé en ce qu'**un système de navigation d'un véhicule de service est configuré de telle sorte que, lors de la sélection ou du rapprochement d'une installation d'énergie éolienne, en particulier de tombée en dessous d'une distance limite à l'éolienne et / ou d'un délai limite de retard jusqu'à l'arrivée, une demande de service est envoyée automatiquement depuis le système de navigation ou depuis un centre de surveillance à distance à l'éolienne ou à un centre de surveillance à distance de l'éolienne, qui est détectée à partir de l'éolienne comme une condition d'entrée (23b, 24b, 25b) ou une demande pour une procédure dans une position particulière de l'azimut (9, 12, 13).

9. Éolienne comportant une tour (2) ainsi qu'une nacelle (1) disposée de manière rotative sur la tour (2) avec une hélice (1a), comprenant en outre une unité de commande avec une commande d'azimut (21), **caractérisée en ce que** l'unité de commande est configurée pour mettre en oeuvre un procédé selon l'une quelconque des revendications 1 à 10.

10. Éolienne selon la revendication 9, **caractérisée en ce que** l'unité de commande comprend un ou plusieurs codes d'état (23a, 24a, 25a), la survenance de conditions d'entrée (23b, 24b, 25b) et / ou de conditions de sortie (23c, 24c, 25c) étant surveillée au moyen dudit ou desdits codes d'état en ce qui concerne une ou plusieurs variables d'état et / ou variables de fonctionnement, des priorités différentes étant prévues en particulier pour les différents codes d'état (23a, 24a, 25a) pour le traitement des programmes de contrôle d'azimut spécifiques (23, 24, 25) qui leur sont associés.

11. Produit de programme informatique comportant des moyens formant code de programme, qui lorsqu'il est exécuté dans un système de traitement de données configuré en tant qu'une unité de commande d'une éolienne, met en oeuvre un procédé permettant de faire fonctionner l'éolienne selon l'une quelconque des revendications 1 à 8.
